# EUROPÄISCHE PATENTSCHRIFT

(11) **EP 3 495 741 B1**
(45) Veröffentlichungstag und Bekanntmachung des Hinweises auf die Patenterteilung: **01.09.2021**
(21) Anmeldenummer: 19153469.2
(22) Anmeldetag: 02.02.2009
(51) Int. Cl.: F24C 7/08, A21B 7/00

(54) **VERFAHREN ZUM ERSTELLEN EINES ARBEITSABLAUFS IN EINEM SYSTEM VON GARGERÄTEN**
METHOD FOR SETTING A WORK PROCESS IN A SYSTEM OF COOKING DEVICES
PROCÉDÉ DE DÉTERMINATION D'UN DÉROULEMENT DE TRAVAIL DANS UN SYSTÈME D'APPAREILS DE CUISSON

(43) Veröffentlichungstag der Anmeldung: 12.06.2019
(62) Teilanmeldung aus: 09151878.7
(73) Patentinhaber: RATIONAL Aktiengesellschaft, 86899 Landsberg am Lech (DE)
(72) Erfinder: Breunig, Manfred, 86899 Landsberg am Lech (DE); Kutz, Sebastian, 86899 Landsberg am Lech (DE); Kramer, Gerhard, 86899 Landsberg am Lech (DE); Jelitto, Alexander, 86899 Landsberg am Lech (DE); Enders, Armin, 86899 Landsberg am Lech (DE); Pechaigner, Stefan, 86899 Landsberg am Lech (DE); Schulze, Paul, 86899 Landsberg am Lech (DE); Seemüller, Simon, 86899 Landsberg am Lech (DE); Guth, Wolfgang, 86899 Landsberg am Lech (DE); Schneider, Matthias, 86899 Landsberg am Lech (DE)
(74) Vertreter: Weber-Bruls, Dorothée

(56) Entgegenhaltungen:
- DE-U1- 20 203 117

## Beschreibung

Die vorliegende Erfindung betrifft ein Verfahren zum Bestimmen eines Arbeitsablaufs in zumindest einem Gargerät, genauer gesagt ein Verfahren zum Erstellen zumindest eines Arbeitsablaufes in einem System von Gargeräten, die jeweils eine Anzeige- und Eingabeeinrichtung aufweisen und über ein Netzwerk verbunden sind, wobei eine externe Anzeige- und Eingabeeinrichtung mit dem Netzwerk verbunden ist.

Im Stand der Technik sind zahlreiche Verfahren zum Führen von Garprozessen bekannt. Ein gattungsgemäßes Verfahren ist beispielsweise aus der EP 1 989 978 A1 bekannt. Das bekannte Verfahren ermöglicht es beispielsweise, eine morgendliche Thekenbeschickung für eine Bäckereifiliale zeit- und energieoptimiert zu gewährleisten. So können täglich verwendete Garprogramme, die jeden Tag aus tiefgefrorenen Rohlingen oder vorgebackenen Produkten frisch zu backende Teigwaren fertigen sollen, einmalig über eine Eingabeeinrichtung in ein Gargerät eingegeben und gespeichert werden, so dass dann nach jedem morgendlichen Start des Gargeräts dieses zuerst seinen Garraum aufheizt und dann die vorgegebene Programme sozusagen in einem Stapel abarbeitet, und zwar unter besonderer Berücksichtigung einer Zeit- und Energieoptimierung.

Die DE 10 2006 008 096 A1 offenbart ein Verfahren zum Führen von Garprogrammen in einem Garraum eines Gargerätes für zu unterschiedlichen Zeitpunkten und auf unterschiedlichen Behandlungsebenen in einem Garraum eingebrachte Gargüter. Zu einem Startzeitpunkt werden die zu einem späteren Zeitpunkt mit Gargut zu beladenden Behandlungsebenen ausgewählt. Nach einer Beladung des Gargerätes mit Gargütern wird ein Garraumklima in Abhängigkeit von der Beladung eingestellt, und es werden im Anschluss Signale für ein Entnehmen eines Gargutes oder der Gargüter durch das Gargerät ausgegeben. In einer Speichereinheit sind Zubereitungsprogramme hinterlegt, die durch eine Eingabe einer Gargutart aufgerufen werden können.

In der DE 20 2004 018 719 U1 ist ein Bedienelement für ein Gargerät, umfassend ein Touchscreen mit einer Displayanzeige samt einer Vielzahl von Touchelementen, die von einem Benutzer betätigt werden können, beschrieben. Eine strukturierte Anordnung von Haupt- und Unterbedienebenen eines Bedienmenüs auf dem Touchscreen sollen dabei eine übersichtliche Führung und Einstellung eines Gargerätes über das Bedienelement ermöglichen.

In der WO 2008/084917 A1 sind ein System und eine Methode für eine Steuerung eines Gargeräts beschrieben. Eine Bedienerkonsole für das Gargerät beinhaltet dabei eine Vielzahl von Knöpfen, darunter einen Vorschlagsknopf, welcher Vorschläge für eine Steuerung des Gargeräts auf Basis einer Identifizierung von Nahrungsmitteln ermöglicht. Nach einer Identifizierung eines Nahrungsmittels können Rezepte von Gerichten, die mit dem identifizierten Nahrungsmittel gekocht werden können, vorgeschlagen werden, wobei eine Identifizierung beispielsweise mittels eines Radio Frequency (RF-) Tags erfolgen kann. Es ist weiterhin möglich, dass basierend auf mehr als einem identifizierten Nahrungsmittel Gerichte vorgeschlagen werden. Auf der Grundlage von identifizierten Nahrungsmitteln können somit Rezeptvorschläge unterbreitet und mittels eines Kochmethodenknopfes detaillierte Kochmethoden, bezogen auf beispielsweise vorgeschlagene Rezepte, empfohlen werden. Ein Modifikationsknopf ermöglicht eine Anpassung der Steuerung des Gargeräts entsprechend der vorgeschlagenen Kochmethode an die Wünsche eines Benutzers. Weiterhin ermöglicht das bekannte Verfahren, Informationen über ein Nahrungsmittel, das verarbeitet werden soll, zu einem Server zu übermitteln, der optimale Steuerungsinformationen für ein zu garendes Nahrungsmittel über ein Netzwerk zu einem Gargerät überträgt.

In der EP 1 798 479 A1 ist ein Verfahren zum Betrieb eines Gargerätes offenbart, bei dem zu einem Garprogramm eines ersten ausgewählten Garguts weitere passende Gargüter oder Garprogramme in Abhängigkeit von Garparametern des ersten Garguts automatisch zugeordnet und diese für eine Auswahl durch einen Benutzer angezeigt werden. Eine solche automatisierte Zuordnung von weiteren passenden Gargütern oder Garprogrammen kann dabei auch in Abhängigkeit von einer Vielzahl bereits ausgewählter Gargüter bzw. Garprogrammen erfolgen.

Netzwerke von Gargeräten sind im Stand der Technik ebenfalls bekannt. In der DE 202 03 117 U1 ist beispielsweise eine Vorrichtung zur Wärmebehandlung von Lebensmitteln mit mindestens einem Ofenmodul und mit mindestens einem programmierbaren Bedienteil, das mit dem Ofenmodul zu dessen Steuerung über einen Bus gekoppelt ist, bekannt, wobei jedes Bedienteil und jedes Ofenmodul über mindestens eine Schnittstelle mit dem Bus gekoppelt ist. Auf einem Anzeigefeld einer Anzeigeeinrichtung des Bedienteils eines Ofenmoduls können kontextsensitive Hilfeinformationen angezeigt werden.

In der WO 96/03681 A2 ist ein Verfahren zur Zubereitung eines aus mehreren Einzelspeisen bestehenden Gerichtes offenbart, wobei die Einzelspeisen jeweils in einem gesonderten Gargerät zubereitet werden. Die einzelnen Gargeräte werden durch eine zentrale Steuerungsanlage hinsichtlich ihrer Zubereitungszeit oder ihrer Zubereitungs-Anfangszeit so gesteuert, dass ein praktisch gleichzeitiges Garende der einzelnen Speisen erreicht werden kann.

Die WO 2007/035852 A2 beschreibt ein Verfahren und ein Gerät zum Bestimmen einer Art und Menge von Nahrungsmitteln, die in einem Gargerät verarbeitet werden. Das Gargerät verfügt zu diesem Zweck über einen Controller, dem Informationen entweder manuell oder über einen Einsatz von RFID-Chips eingegeben werden und der mit einem Server verbunden ist, der über eine Datenbank verfügt, die die Anzahl jedes verarbeiteten Nahrungsmittels erfasst und auch automatisch ein Inventar erstellen kann. Dabei kann eine Vielzahl von Gargeräten über mehrere Controller mit dem Server verbunden sein.

In der WO 97/41392 A2 ist ein Netzwerk zur Überwachung und Wartung einer großen Anzahl von räumlich verteilt aufgestellten Gargeräten offenbart, das mittels einer Steuerzentrale gesteuert wird. Eine Kommunikation zwischen der Steuerzentrale und den Gargeräten erfolgt über zwischengeschaltete Basisstationen, die eine zentrale Steuerung und Überwachung einer Wartung, einer Reparatur und eines Energiemanagements der Gargeräte ermöglichen. Weiterhin kann in dem Verfahren auch vorgesehen sein, dass eine Buchhaltung zentral über die Steuerzentrale durchgeführt wird. Auch eine Anbindung von Verkaufspunkten an eine Buchhaltungs- und Rechnungsdatenbank, welche automatisch aktualisiert werden kann, wird ermöglicht.

In der nicht vorveröffentlichten DE 10 2008 009 659 ist ein Gargerätnetzwerk beschreiben, bei dem ein Gargerät Daten erzeugt, die geeignet sind, den Betrieb eines weiteren Gargeräts zu beeinflussen, so dass sich der Garbetrieb in unterschiedlichen Gargeräten synchronisieren lässt. Wenn bspw. große Mengen einer Speise zubereitet werden sollen, die nicht in einem einzigen Gargerät Platz finden, können die Speisen einfach auf zwei Gargeräte aufgeteilt werden, da durch die ausgetauschten Daten sichergestellt wird, dass der Garbetrieb, der in einem signalgebenden Gargerät durchgeführt wird, auf identische Weise in dem weiteren Gargerät durchgeführt wird. Effektiv kann durch diese Funktion aus zwei an sich autarken und unabhängigen Gargeräten ein Gargerät mit doppelter Kapazität geschaffen werden.

Auch Warenwirtschaftssysteme in Kombination mit Gargeräten sind an sich bekannt. So ist beispielsweise in der DE 10 2008 031 378 A1 die Erfassung eines Warenein- und ausgangs an einem Gargerät zur Verbesserung einer Lagerhaltung bekannt.

Aufgabe der vorliegenden Erfindung ist es, ein Verfahren zu liefern, das die Nachteile des Stands der Technik überwindet, so dass eine höhere Funktionalität bei gleichzeitig weiterer Automatisierung ermöglicht wird. Auch soll durch das erfindungsgemäße Verfahren dem Bedürfnis entgegengekommen werden, dass z. B. nach einer Eingabe eines geplanten Menüs und einer gewünschten Anzahl hiervon automatisch ein Arbeitsablauf unter Berücksichtigung von idealen Garprozessen und zur Verfügung stehenden Gerätekapazitäten einer Vielzahl von potentiell einsetzbaren Gargeräten erstellt wird. Eine Anbindung von Gargeräten an ein Warenwirtschaftssystem, welches benötigte Nahrungsmittel automatisch bei Bedarf bestellt, vorzugsweise mit einer Anbindung an ein Controllingsystem für eine automatische Kalkulation der Kosten für einen Wareneinsatz, Personal- und/oder Energiekosten, um eine instantane, alle anfallenden Kostenpositionen berücksichtigende Bepreisung der zuzubereitenden Nahrungsmittel zu ermöglichen, ist ebenfalls wünschenswert, da bisher ein Produktionsablauf in Restaurants und/oder Kantinen oftmals nur durch Erfahrungswerte einer Küchenmannschaft bestimmt ist. Auch sollen Erfahrungswerte einer Küchenmannschaft für einen Produktionsablauf erlernbar und/oder bekannte Erfahrungswerte bereits vorab in einem System von Gargeräten zur Verbgung gestellt werden.

Die Aufgabe wird erfindungsgemäß durch ein Verfahren nach Anspruch 1 gelöst. Bevorzugte erfindungsgemäße Verfahren sind in den Ansprüchen 2 bis 6 beschrieben.

Es kann auch ein System an Gargeräten und Netzwerk zum Durchführen eines erfindungsgemäßen Verfahrens geliefert werden, wobei das System ausgerüstet ist mit zumindest einer Funktionseinrichtung, einer Anzeigeeinrichtung, einer Bedieneinrichtung und einer Speichereinrichtung, und die Anzeigeeinrichtung und die Bedieneinrichtung vorzugsweise zumindest ein gemeinsames Touchscreen umfassen, wobei vorzugsweise die Gargeräte untereinander und mit zumindest einem Warenwirtschaftssystem und/oder einem Controllingsystem verbunden sind, vorzugsweise drahtlos und/oder über ein Intranet oder das Internet.

Weiter umfasst das System eine Anzeige- und/oder Bedieneinrichtung getrennt von den Gargeräten, vorzugsweise umfassend ein Touchscreen und/oder handhaltbar.

Es kann mithin vorgesehen sein, dass aufgrund einer automatischen Kommunikation zumindest eines Gargeräts mit zumindest einem Warenwirtschaftssystem ein Verfahren zum Bestimmen eines Arbeitsablaufes in dem Gargerät weiter automatisiert werden und selbstlernend sein kann, indem beispielsweise eine Bedienperson ein bestimmtes, mehrere Gargüter umfassendes Menü auswählt und dann, je nach Wunsch, entweder die Anzahl an Menüs, die meist der Anzahl an zu bekochender Personen entspricht, manuell eingibt oder sich hierzu einen Vorschlag über das Warenwirtschaftssystem zwecks optimaler Garung vorhandener Gargüter unterbreiten lässt, so dass dann im Anschluss das Menü für die ausgewählte Anzahl fertig gestellt werden kann, wobei sich an eine Verspeisung der erstellten Menüs ein Selbstlernungsprozess insofern anschließt, als dass die Bedienperson sodann für die verschiedenen Gargüter des Menüs manuell eingeben kann, ob eine überschüssige Menge oder Fehlmenge an einzelnen Gargütern vorliegt, so dass erfindungsgemäß für zukünftige Verfahren die vom Warenwirtschaftssystem vorgeschlagene Anzahl an Menüs, samt Gargutmengen, an diese Mengeninformationen automatisch angepasst ist. Da beispielsweise in jeder Großküche unterschiedliche Bedürfnisse an spezielle Menüs gestellt werden, beispielsweise in Abhängigkeit davon, ob mehr ältere Menschen oder jüngere Menschen begart werden sollen, kann so eine Anpassung an die speziellen Bedürfnisse einer Großküche stattfinden, was wiederum den Arbeitsablauf in dieser Großküche vereinfacht.

Bei den Gargeräten kann es sich beispielsweise um SelfCooking Centers® oder VarioCooking Centers® handeln, wobei selbstverständlich jedes andere Gargerät ebenso geeignet ist.

Ein Ziel der Erfindung ist es, einen Arbeits- bzw. Produktionsablauf in beispielsweise Restaurants und/oder Kantinen, also der Großküche, der bislang oftmals nur durch Erfahrungswerte einer Küchenmannschaft bestimmt wird, derart zu optimieren, dass besagte Erfahrungswerte mittels beispielsweise eines Systems von lernfähigen Gargeräten automatisiert berücksichtigt werden können. Dabei kann auch vorgesehen sein, dass den Gargeräten herstellerseits bereits grundlegende Erfahrungswerte einprogrammiert und in zumindest einer dafür geeigneten Speichereinrichtung gespeichert sein können, um im Laufe des Betriebs der Gargeräte an die speziellen Bedürfnisse des jeweiligen Restaurants bzw. der jeweiligen Kantine angepasst zu werden. Schnittstellen zwischen Mitgliedern der Küchenmannschaft untereinander und/oder einer Vielzahl von Gargeräten und/oder Systemen innerhalb des gesamten Produktionsablaufes können dabei über Funktionen des erfindungsgemäßen Verfahrens realisiert und somit ersetzt werden. Mögliche Fehlerquellen, beispielsweise durch eine fehlerhafte manuelle Eingabe, können ferner reduziert und ein Ausfall von einzelnen Bedienpersonen mit speziellem Wissen leichter kompensiert werden. Das erfindungsgemäße Verfahren ist für eine Vielzahl an Gargeräten, die untereinander vernetzt sind und somit miteinander in Wechselwirkung stehen, einzusetzen. Dann kann einem Benutzer angezeigt werden, zu welchem Zeitpunkt welches Gargeräte mit welchem Gargut be- und/oder entladen werden sollen.

Zudem kann vorgesehen sein, dass zumindest ein Gargerät nicht nur mit mindestens einem Warenwirtschaftssystem, sondern auch mit mindestens einem Controllingsystem verbunden ist. Auch kann selbstverständlich vorgesehen sein, dass eine Vielzahl von untereinander vernetzten Gargeräten mit einer Vielzahl von Warenwirtschafts- und/oder Controllingsystem, je nach Bedarf, verbunden sein können.

Eine weitere Vereinfachung entsteht erfindungsgemäß durch eine Optimierung an Ressourcen, wie Wasser, Energie, Platz, Kosten und dergleichen, errechnet werden. Weiterhin können von einem der Gargeräte Vorschläge für Arbeitsablaufpläne unter Berücksichtigung von idealen Garprozessen und benötigten sowie vorhandenen Gerätekapazitäten erstellt werden.

Die bestimmte benötigte Anzahl an Gargüter kann zudem mit dem in dem mindestens einem Warenwirtschaftssystem erfassten, also vorhandenen bzw. verfügbaren Bestand, abgeglichen werden. Im Falle einer erkannten Fehlmenge kann dann auch eine automatische Nachbestellung durch das Warenwirtschaftsystem erfolgen.

Auch kann vorgesehen sein, dass der Arbeitsablauf nicht nur ein Tagesmenü, sondern ein Menü für mindestens zwei Tage oder für eine Woche umfasst. In diesem Fall können nicht nur optimale Tagesabläufe für eine Zubereitung vorgeschlagen werden, sondern es ist auch möglich, eine tagesübergreifende Vorproduktion mit dem Ziel einer verbesserten Kapazitätsauslastung und Zusammenfassung ähnlicher/gleicher Gargüter zu empfehlen. Die Bestimmung eines Arbeitsablaufs, der auch eine tagesübergreifende Vorproduktion umfassen kann, kann offensichtlich unter einer Vielzahl von Optimierungsparametern, bspw. unter energetischen Gesichtspunkten, einer minimalen eingesetzten Arbeitszeit, einer minimalen Dauer einer Gerätebelegung, einer verbesserten Kapazitätsauslastung, einer Zusammenfassung ähnlicher/gleicher Gargüter und/oder einer Reduzierung eines Gargutgewichtsverlustes, einer Verschmutzung, einer Rauchentstehung und/oder eines Geruchs, erfolgen. Auch ist es offensichtlich, dass eine Vielzahl alternativer Optimierungsziele verfolgt werden können.

Weiterhin kann vorgesehen sein, dass eine Anbindung der Gargeräte an zumindest ein Controllingsystem eine direkte Berechnung und Abrechnung aller in einem Restaurant und/oder einer Kantine anfallenden Kostenpositionen ermöglichen kann. Dabei werden alle Informationen und Berechnungen von einem der Gargeräte an zumindest ein Controllingsystem weitergeleitet, welches beispielsweise die Kosten eines Wareneinsatzes, Personalkosten, Kosten für jedes erzeugte Gericht und/oder Kosten für jeden Gast oder Konsumenten errechnet. Dabei ist selbstverständlich vorgesehen, dass eine Vielzahl weiterer Kostenpositionen, wie Energiekosten, Wartungsaufwendungen oder dergleichen, bei Bedarf bestimmbar und direkt einpreisbar sind.

Nach einer Bestimmung eines Arbeitsablaufs kann auch vorgesehen sein, dass auf einer Anzeigeeinrichtung Zubereitungsvorschläge oder Zubehörvorschläge auf einer Anzeigeeinrichtung graphisch visualisiert werden. Dabei ist es offensichtlich möglich, dass sowohl eine Übersicht von Arbeitsabläufen über mehrere Tage, eine Tagesansicht und/oder ein freiwählbarer Ausschnitt eines Arbeitsablaufs innerhalb eines Tages angezeigt werden können.

Auch ist es offensichtlich, dass jederzeit zusätzliche Menüs eingebbar sind und bereits getätigte Eingaben verändert oder gelöscht werden können, was jeweils zu einer automatischen Anpassung des Arbeitsablaufs führen kann.

Durch den Einsatz eines erfindungsgemäßen Verfahrens kann somit eine manuelle Vorplanung von Arbeitsabläufen entfallen, ein Änderungswesen professionalisiert werden und/oder Unter- und/oder Überbestände an Gargütern durch automatisierte Warenbestellungen deutlich reduziert werden. Weiterhin ermöglicht das erfindungsgemäße Verfahren eine Qualitätsverbesserung durch eine Reduzierung von Fehlern, beispielsweise durch den Einsatz falschen Zubehörs, und/oder von Warmhaltezeiten. Auch ist eine deutlich verbesserte Kostenkontrolle und Sicherung einer Gewinnsituation durch exaktere Daten möglich, da alle anfallenden Kostenpositionen instantan berücksichtigt werden können und auch eine automatische Abrechnung erfolgen kann. Zudem können keine Berechnungsfehler bei einer Bepreisung der zubereiteten Gerichte entstehen, da eine exakte Berechnung der Kosten durch wenigstens ein Controllingsystem erfolgt. Weiterhin können Erfahrungswerte einer Küchenmannschaft personenunabhängig erhalten werden, auch wenn einzelne Personen, beispielsweise wegen Krankheit oder altersbedingt, nicht mehr zur Verfügung stehen.

Weitere Merkmale und Vorteile der Erfindung ergeben sich aus der nachfolgenden Beschreibung, in der Ausführungsbeispiele der Erfindung anhand von schematischen Zeichnungen beispielhaft erläutert sind. Dabei zeigt:
Figur 1 : ein erfindungsgemäßes System von Gargeräten mit einer Anbindung an ein Warenwirtschafts- und Controllingsystem;
Figur 2 : ein Flussdiagramm zur Veranschaulichung von Arbeitsabläufen eines erfindungsgemäßen Verfahrens für eine Erstellung von Arbeitsablauf, automatisierten Bestellungen und/oder Kostenkalkulationen;
Figur 3 : eine beispielhafte Darstellung eines ersten Anzeigebereichs für ein System nach Figur 1 mit einer Auswahl eingegebener Menübestandteile;
Figur 4 : eine Darstellung einer Auswahl von benötigten Nahrungsmitteln für eine Zubereitung des Menüs aus Figur 3 ;
Figur 5 : eine stark vereinfachte Darstellung von Arbeitsablaufvorschlägen für eine Zubereitung des Menüs aus Figur 3 ; und
Figur 6 : eine beispielhafte Berechnung von Kostenpositionen mittels eines Controllingsystems für das in Figur 3 eingegebene Menü.

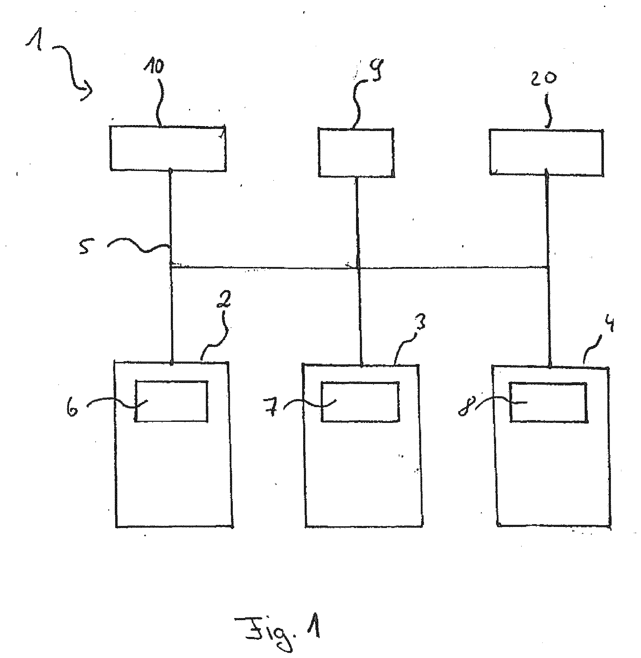

In Figur 1 ist beispielhaft ein erfindungsgemäßes System 1 von erfindungsgemäßen Gargeräten, bestehend aus einem ersten Gargerät 2, einem zweiten Gargerät 3 und einem dritten Gargerät 4, die über ein Netzwerk 5 verbunden sind, für eine Durchführung eines erfindungsgemäßen Verfahrens dargestellt. Bei den Gargeräten 2, 3, 4 kann es sich bspw. jeweils um ein seitens der Anmelderin unter dem Handelsnamen SelfCooking Center® oder unter dem Handelsnamen VarioCoalcing Center® vertriebenes Gargeräte handeln. Eine Eingabe der für eine Durchführung des erfindungsgemäßen Verfahrens benötigten Parameter kann sowohl über eine erste Anzeige- und Eingabeeinrichtung 6 des ersten Gargeräts 2, eine zweite Anzeige- und Eingabeeinrichtung 7 des zweiten Gargeräts 3, eine dritte Anzeige- und Eingabeeinrichtung 8 eines dritten Gargeräts 4 als auch über eine externe Anzeige- und Eingabeeinrichtung 9, die mit dem Netzwerk 5 verbunden ist, erfolgen, wobei die Anzeige- und Eingabeeinrichtungen 6, 7, 8, 9 jeweils vorzugsweise in Form eines Sensorbildschirms oder Touchscreens ausgebildet sein können. Bei dem Netzwerk 5 kann es sich sowohl um ein drahtgebundenes als auch ein drahtloses Netzwerk (nicht gezeigt) handeln.

Zur Durchführung des erfindungsgemäßen Verfahrens kann weiterhin eine Anbindung eines Warenwirtschaftssystems 10, beispielsweise ein seitens der Anmelderin vertriebenes Combi-Link®-System, und eines handelsüblichen Controllingsystems 20 mit den Gargeräten 2, 3, 4 über das Netzwerk 5 vorgesehen sein.

Es ist offensichtlich, dass das in Figur 1 dargestellte System 1 von Gargeräten beispielhaft zu verstehen ist und eine beliebige Anzahl von Gargeräten für eine Durchführung des erfindungsgemäßen Verfahrens eingesetzt werden kann. Weiterhin ist es selbstverständlich möglich, dass weitere Anzeige- und Eingabeeinrichtungen für eine Eingabe der benötigten Parameter vorgesehen sein können. Auch kann vorgesehen sein, dass neben einem Einsatz eines Warenwirtschaftssystem 10 und eines Controllingsystems 20 für beispielsweise unterschiedliche Lagerorte und/oder unterschiedliche Kostenstellen eine jeweils benötigte Anzahl solcher Systeme zum Einsatz kommen kann, und es ist selbstverständlich auch ein Einsatz eines gemeinsamen, kombinierten Warenwirtschafts- und Controllingsystems naheliegend.

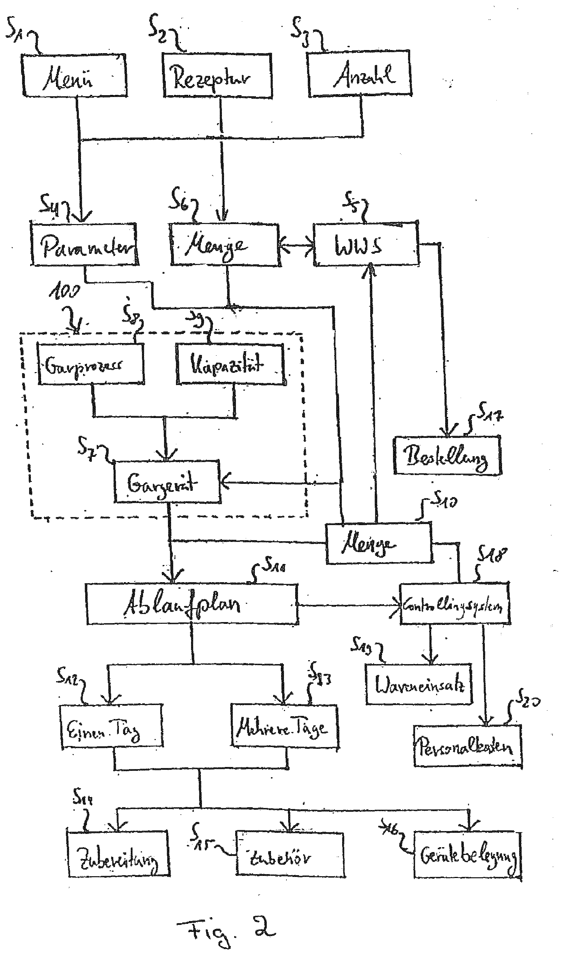

In Figur 2 ist ein Flussdiagramm abgebildet, das mögliche Abläufe eines erfindungsgemäßen Verfahrens für eine Erstellung zumindest eines Arbeitsablaufes, mindestens einer Kostenkalkulation und/oder wenigstens einer automatisierten Warenbestellung anhand des in Figur 1 beispielhaft gezeigten Systems 1 von Gargeräten 2, 3, 4 darstellt.

In einem Schritt S1 kann von einem Benutzer ein Menü, also ein Gericht bzw. eine Speise, und in einem Schritt S2 eine Rezeptur sowie optional eine gewünschte Anzahl, siehe Schritt S3, über eine der in Figur 1 beispielhaft dargestellten Anzeige- und Eingabeeinrichtung 6, 7, 8, 9 eingegeben werden. Ein in dem Schritt S1 eingegebenes Menü wird durch mehrere Gargüter bestimmt, wobei der Benutzer alle Gargüter einzeln eingeben kann und/oder eine Eingabe eines Namens eines Menüs erfolgt, beispielsweise "Schweinegulasch", wobei die für das über die Nennung eines Namens eingegebene Menü benötigten Gargüter in einer nicht gezeigten Datenbank mit schon gespeicherten Erfahrungswerten zu Garparametem und dergleichen hinterlegt sein können und bei Bedarf automatisch abrufbar sind. Auch für die im Schritt 2 eingegebene Rezeptur können die benötigten Gargüter entweder manuell eingegeben oder aus besagter Datenbank automatisch abgefragt werden.

Basierend auf einer manuellen Eingabe von Parametern gemäß der Auswahl des Schritts S2 und ggf. S3 im Schritt S4 kann eine Eingabe einer benötigten Menge an Gargütern entweder in einem Schritt S6 erfolgen oder durch einen Versand von Informationen eines Warenwirtschaftssystems, siehe Schritt S5, unnötig sein, da bereits vorliegend, nämlich wenn beispielsweise bereits entsprechende Erfahrungswerte dem System bekannt sind. Änderungen des Menüs aus Schritt S1, der Rezepturen aus Schritt S2 der gewünschten Anzahl an Menüs aus Schritt S3, und/oder der gewünschten Menge an Gargütern aus Schritt 4 beispielsweise aus Gründen der Verfügbarkeit oder auf Wunsch des Benutzers, können jederzeit erfolgen und werden in den folgenden Schritte automatisch für die benötigten Berechnungen berücksichtigt.

Die Eingabe aus Schritt S4 bzw. die Information aus Schritt 6 wird in einem Schritt S7 von einem Gargerät unter Berücksichtigung von in dem Gargerät hinterlegten Garprozessen, siehe Schritt S8, und einer hinterlegten Kapazität des Gargeräts, siehe Schritt S9, verarbeitet. Dabei errechnet das Gargerät unter Einbeziehung der Eingaben des Schritts S1 oder S2 und ggf. S3 die idealen Garprozesse und benötigten Gerätekapazitäten. Die benötigten Mengen an jeweiligen Gargütern, samt Gewürzen und/oder weiteren benötigten Zutaten, sofern sie nicht bereits durch Schritt S4 oder S6 festgelegt wurden, können auch vom Gargerät bestimmt werden. Die im Schritt S7 ermittelte benötigte Menge an Gargütern wird dann in einem Schritt S10 sowohl an das Warenwirtschaftssystem, siehe Schritt S5, zur Aktualisierung weitergeleitet als auch an ein Controllingsystem, siehe Schritt S18, so dass eine Selbstanlernung vorliegt.

Wird eine Differenz zwischen der benötigten Menge und der vorhandenen Menge an Gargütern von dem Warenwirtschaftssystem festgestellt, kann mindestens eine automatische Bestellung in einem Schritt S17 der zusätzlich benötigten Gargüter durch das Warenwirtschaftssystem in Schritt S5 veranlasst werden. Dabei kann auf Mindestbestandsmengen, die eine Nachbestellung auslösen, zurückgegriffen werden. Weiterhin wird zumindest ein Arbeitsablaufplan (Schritt S11) mittels von im Gargerät aus Schritt S7 festgelegten, benötigten Ressourcen, insbesondere bestimmt durch Energie, Wasser, Zeit und Platz, automatisch erstellt, um z. B. zu einem energetisch optimalen Ablauf und/oder einer maximalen Geräteauslastung zu führen.

Der mindestens eine erzeugte Arbeitsablaufplan wird dem Benutzer auf einer der in Figur 1 beispielhaft dargestellten Anzeige- und Eingabeeinrichtung 6, 7, 8, 9 visualisiert dargestellt, so dass erkenntlich wird, zu welchem Zeitpunkt die jeweilig benötigten Gargüter in welches oder welche Gargeräte, wie beispielsweise die Gargeräte 2, 3, 4 aus Figur 1 , beladen bzw, aus demselben/denselben entladen werden müssen.

Der in Schritt S11 erstellte Arbeitsablauf kann dabei für einen Tag, siehe Schritt S12, oder für mehrere Tage, siehe Schritt S13, entsprechend den Anforderungen aus den zugrunde liegenden Information in Schritt S6 und S7, erstellt werden. Um eine verbesserte Kapazitätsauslastung zu erreichen und/oder ein Zusammenfassen gleicher Gargüter (nicht dargestellt) zu ermöglichen, werden bei einer Erstellung eines Ablaufplans für zumindest zwei Tage, siehe Schritt S11, in dem Schritt S13 gleiche Gargüter zusammengefasst, und es kann eine tagesübergreifende Vorproduktion empfohlen werden.

Der Arbeitsablaufplan kann dabei unter Einbeziehung einer Vielzahl von Parametern optimiert werden. Beispielsweise ist denkbar, dass der Arbeitsablaufplan, ggf. umfassend eine tagesübergreifende Vorproduktion, unter energetischen Gesichtspunkten optimiert wird, eine verbesserte Kapazitätsauslastung erreicht und/oder eine Zusammenfassung ähnlicher/gleicher Gargüter berücksichtigt wird. Auch kann es selbstverständlich möglich sein, dass eine eingesetzte Arbeitszeit oder eine Dauer einer Gerätebelegung minimiert wird. Es ist also offensichtlich, dass eine Optimierung unter einer Vielzahl von weiteren Parametern erfolgen kann.

Weiterhin werden Informationen aus dem Arbeitsablaufplan von Schritt S11 an das Controllingsystem, siehe Schritt S18, weitergeleitet, welches automatisch unter Berücksichtigung der benötigten Mengen, siehe Schritt S10, die Kosten eines Wareneinsatzes in einem Schritt S19 und/oder Personalkosten, siehe Schritt S20, sowie weitere Kostenpositionen (nicht gezeigt) berechnen kann. Neben einer Berechnung der Kosten für den Wareneinsatz aus Schritt S19 und der Personalkosten in Schritt S20 ist beispielsweise denkbar, dass Kosten für jede erzeugte Speise und/oder jedes Menü, wahlweise kumuliert und/oder pro Konsument, berechnet werden können. Dabei ist es offensichtlich, dass die beschriebenen Kostenpositionen beispielhaft zu verstehen sind und selbstverständlich beliebige andere Kostenpositionen bestimmbar sind.

Nach der Erstellung eines Ablaufplanes in Schritt S11 für einen Tag (Schritt S12) oder mehrere Tage (Schritt S13) können beispielsweise Zubereitungsvorschläge in einem Schritt S14, Zubehörvorschläge in einem Schritt S15 und/oder Gerätebelegungsvorschläge in einem Schritt S16 von dem Gargerät bestimmt und auf einer der Anzeige- und Eingabeeinrichtung 6, 7, 8, 9 aus Figur 1 dem Benutzer dargestellt werden. Dabei kann dem Benutzer wahlweise eine Übersicht über einen Arbeitsablauf oder ein Ausschnitt aus demselben angezeigt werden. Wahlweise können selbstverständlich auch Zubereitungs- und/oder Zubehörvorschläge dargestellt werden. Entsprechende Wechsel zwischen den verschiedenen Anzeigen können dabei beispielsweise anhand von nicht gezeigten Bedienelementen erfolgen.

Es ist auch möglich, dass am Ende eines Ablaufplans, wie z. B. am Ende eines Produktionstages, überschüssige und/oder zu geringe Mengen an Gargütern erfasst und/oder eingegeben werden, um daraus eine Änderung eines Menüs, einer Rezeptur, einer Menge oder dergleichen zu bestimmen und zukünftig zu berücksichtigen, so dass ein Selbstanlernen und somit eine ständige Verbesserung stattfindet. Auch ist es offensichtlich, dass anstelle einer direkten Änderung beispielsweise einer Rezeptur einem Benutzer ein Vorschlag unterbreitet wird, der im Fall einer Annahme zu einer Änderung führt. Weiterhin ist das erfindungsgemäße Verfahren selbstverständlich nicht auf einen Einsatz eines Gargeräts in Schritt S7 mit in den Schritten S8 und S9 hinterlegten Garprozessen und der Gerätekapazität beschränkt. Es kann offensichtlicher Weise vorgesehen sein, dass eine Vielzahl von Gargeräten entsprechend des Systems 1 gemeinsam eingesetzt wird, die beispielsweise entsprechend der Darstellung in Figur 1 über ein Netzwerk 5 mit dem Warenwirtschafts- und/oder Controllingsystemen verbindbar ist.

Durch eine Anbindung von untereinander vernetzten Gargeräten an ein Warenwirtschafts- und/oder Cantrollingsystem kann ein Änderungswesen professionalisiert werden, durch das Unter- und/oder Überbestände reduziert werden können.

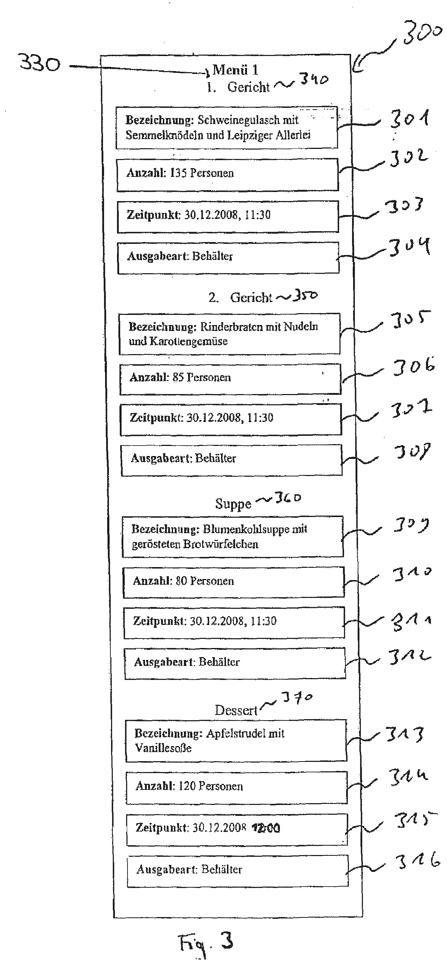

Figur 3 stellt einen ersten Anzeigebereich 300 auf einer der Anzeige- und Eingabeeinrichtung 6, 7, 8, 9 von Figur 1 mit einem ersten Menü 330 dar, das von dem erfindungsgemäßen Verfahren entsprechend Figur 2 weiterbearbeitet werden kann. Eine Eingabe zu einem ersten Gericht 340 umfasst dabei eine Bezeichnung 301, hier "Schweinegulasch mit Semmelknödeln und Leipziger Allerlei", eine gewünschte Anzahl 302, hier für 135 Personen, einen Zeitpunkt 303, an dem eine Ausgabe erfolgen soll, hier 11:30 Uhr am 30.12.2008, sowie eine benötigte Ausgabeart 304, hier in einem Behälter. Weiterhin umfasst das erste Menü 330 ein zweites, alternatives Gericht 350 mit einer Bezeichnung 305 "Rinderbraten mit Nudeln und Karottengemüse", für eine Anzahl 306 von 85 Personen, mit einem Ausgabezeitpunkt 307 am 30.12.2008 um 11:30 Uhr und einer Ausgabeart 308 über einen Behälter. Zudem kann vorgesehen sein, dass das erste Menü 330 auch eine Vorspeise 360 und eine Nachspeise 370 aufweist. Dabei kann es sich bei der Vorspeise 360 beispielsweise um eine Suppe handeln, die durch eine Bezeichnung 309 "Blumenkohlsuppe mit gerösteten Brotwürfelchen", eine Anzahl 310 von 80 Personen, einen Ausgabezeitpunkt 311 am 30.12,2008 um 11:30 Uhr und eine Ausgabeart 312 in einem Behälter spezifiziert ist. Entsprechend kann das Dessert 370 durch eine Bezeichnung 312 "Apfelstrudel mit Vanillesoßen", eine Anzahl 314 von 120 Personen, einen Zeitpunkt 315 am 30.12.2008 um 12 Uhr und eine Ausgabeart 316 in Behältern bestimmt werden.

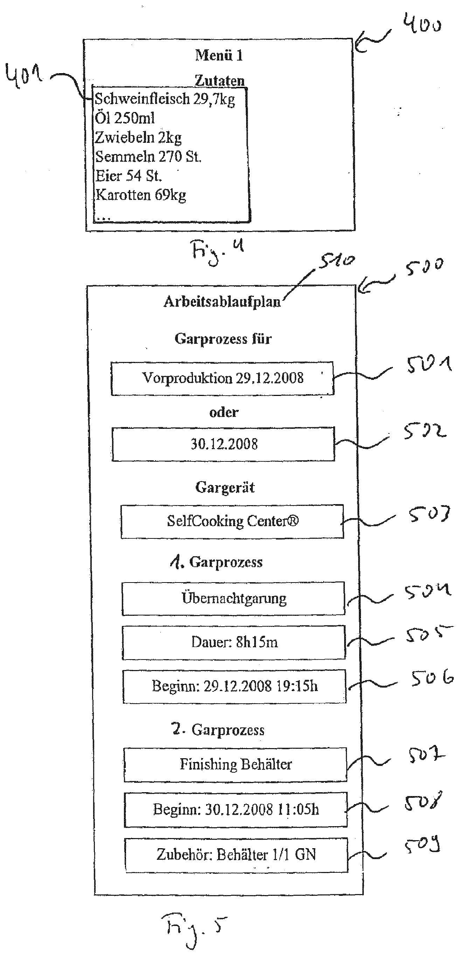

Für das in Figur 3 dargestellte erste Menü 330 kann von einem der beispielsweise in Figur 1 dargestellten Gargeräte 2, 3, 4 eine benötigte Menge an Gargütern bzw. Zutaten berechnet und auf einem zweiten Anzeigebereich 400 der Anzeige- und Eingabeeinrichtung, wie in Figur 4 gezeigt, visualisiert werden. Dabei werden die benötigten Zutaten 401 in dem zweiten Anzeigebereich 400 mit einer Bezeichnung und einer jeweils benötigten Menge einem Benutzer angezeigt, wie beispielsweise 29,7 kg Schweinefleisch, 250 ml Öl, 2 kg Zwiebeln, 270 Semmeln, 54 Eier und 69 kg Karotten.

Weiterhin können die errechneten Informationen, wie zu den Zutaten gemäß Figur 4, auch einem Warenwirtschaftssystem und/oder einem Controllingsystem zur Verfügung gestellt werden. Stellt das Warenwirtschaftssystem eine Differenz zwischen der Menge der benötigten Zutaten 401 und einer vorhandenen Mengen fest, kann entsprechend der Beschreibung von Figur 2 eine automatische Bestellung an Zutaten ausgelöst werden. Auch kann vorgesehen sein, dass das Warenwirtschaftssystem automatisch alternative Nahrungsmittel, beispielsweise mit ablaufendem Haltbarkeitsdatum, einem Benutzer vorschlägt, um eine Verwertung dieser Zutaten sicherzustellen (nicht gezeigt).

Ferner kann einem Benutzer ein Arbeitsablaufplan, wie beispielhaft in Figur 5 in einem dritten Anzeigebereich 500 der Anzeige- und Eingabeeinrichtung dargestellt, angezeigt werden. Dabei kann ein Arbeitsablaufplan 510 einen ermittelten Garprozess für beispielsweise eine Vorproduktion 501 am Vortag eines gewünschten Ausgabezeitpunktes oder eine Zubereitung 502 am Tag des Ausgabezeitpunktes sowie ein dafür benötigtes Gargerät 503, beispielsweise ein SelfCooking Center® der Anmelderin vorschlagen. Ein Arbeitsablauf kann somit eine Vielzahl von Garprozessen umfassen, beispielsweise eine Übernachgarung 504 mit einer Dauer 505 von acht Stunden und fünfzehn Minuten als ersten Garprozess, der einen Beginn 506 bereits einen Tag vor einer gewünschten Ausgabezeit, nämlich in dem gegebenen Beispiel am 29. Dezember 2008 um 19:15 Uhr haben soll. Als zweiten Garprozess kann dann ein Finishing 507, dessen Beginn 508 kurz vor dem gewünschten Ausgabezeitpunkt zeitlich angesetzt wird, nämlich um 11:05 Uhr, in einem 1/1 GN Behälter als Zubehör 509 vorgeschlagen werden. Die beiden beschriebenen Garprozesse sowie das eingesetzte Gargerät selbst sind beispielhaft zu verstehen, und es ist offensichtlich, dass beliebige weitere Garprozesse und der Einsatz alternativer Gargeräte vorgeschlagen werden können.

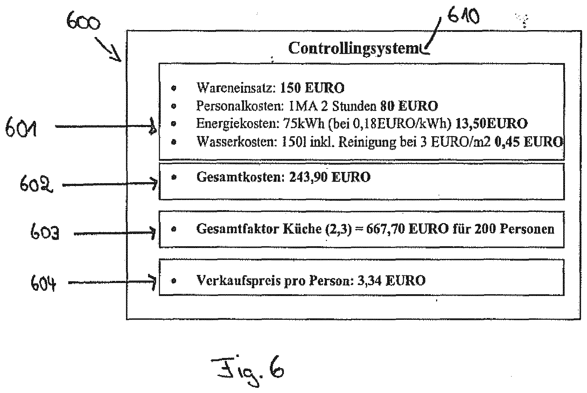

Figur 6 zeigt einen vierten Anzeigebereich 600 der Anzeige- und Eingabeeinrichtung zum Anzeigen eines "Controlling System" 600, in dem anfallende Kostenpositionen einem Benutzer angezeigt werden können. Dabei ist es denkbar, dass sowohl anfallende Einzelpositionen 601, beispielsweise bestehend aus einem Wareneinsatz, Personalkosten von EUR 80,00, Energiekosten von EUR 13,50 und/oder Wasserkosten von EUR 0,45, dargestellt werden, sowie anfallende Gesamtkosten 602 von EUR 243,90. Auch kann vorgesehen sein, dass allgemein anfallende Kostenpositionen, beispielsweise Abschreibungen auf Küchengeräte, in eine Kostenkalkulation einbezogen werden und beispielsweise in Form eines Gesamtfaktors Küche 603 anzeigbar sind. Ein Ziel des Einsatzes eines Controllingsystemes liegt zudem darin, einen Verkaufspreis 604, der für eine kostendeckende Produktion erzielt werden muss, zu bestimmen sowie anzuzeigen, hier EUR 3,34.

Es ist dabei offensichtlich, dass jeder der Anzeigebereiche 300, 400, 500, 600 sowohl einzeln, gemeinsam sowie in jeder denkbaren Kombination auf zumindest einer dafür geeigneten Anzeige- und Eingabeeinrichtung 6, 7, 8 oder 9 der Figur 1 dargestellt werden können.

### Bezugszeichenliste

- 1 :: System von Gargeräten
- 2, 3, 4 :: Gargerät
- 5 :: Netzwerk
- 6, 7, 8, 9 :: Anzeige- und Eingabeeinrichtung
- 10 :: Warenwirtschaftssystem
- 20 :: Controllingsystem
- 300 :: Erster Anzeigebereich "Menüeingabe"
- 301 :: Bezeichnung
- 302 :: Anzahl
- 303 :: Ausgabezeitpunkt
- 304 :: Ausgabeart
- 305 :: Bezeichnung
- 306 :: Anzahl
- 307 :: Ausgabezeitpunkt
- 308 :: Ausgabeart
- 309 :: Bezeichnung
- 310: Anzahl
- 311 :: Ausgabezeitpunkt
- 312 :: Ausgabeart
- 330 :: erstes Menü
- 340 :: erstes Gericht
- 350 :: zweites Gericht
- 360 :: Vorspeise
- 370 :: Dessert
- 313 :: Bezeichnung
- 314:: Anzahl
- 315 :: Ausgabezeitpunkt
- 316 :: Ausgabeart
- 400 :: zweiter Anzeigebereich "Benötigte Nahrungsmittel"
- 401 :: Nahrungsmittel
- 500 :: dritter Anzeigebereich "Arbeitslaufplan"
- 501 :: Garprozessausführung "Vorproduktion"
- 502 :: Garprozessausführung
- 503 :: Gargerät
- 504 :: erste Garprozessart
- 505 :: erste(r) Garprozessebenen
- 506 :: erster(r) Garprozessbeginn
- 507 :: zweite Garprozessart
- 508 :: zweiter Garprozessbeginn
- 509 :: Zubehör
- 510 :: Arbeitsablaufplan
- 600 :: vierter Anzeigebereich "Controllingsystem"
- 601 :: Einzelposition
- 602 :: Gesamtkosten
- 603 :: Vollkostenkalkulation
- 604 :: Verkaufspreis
- 610 :: Controllingsystem

## Patentansprüche

1. Verfahren zum Erstellen zumindest eines Arbeitsablaufes in einem System (1) von Gargeräten (2, 3, 4), die jeweils eine Anzeige- und Eingabeeinrichtung (6, 7, 8) aufweisen und über ein Netzwerk (5) verbunden sind, wobei eine externe Anzeige- und Eingabeeinrichtung (9) mit dem Netzwerk (5) verbunden ist, mit folgenden Schritten:
(a) Eingeben einer Rezeptur über eine der Anzeige- und Eingabeeinrichtungen (6, 7, 8, 9),
(b) Eingeben einer benötigten Menge an Gargütern basierend auf der manuellen Eingabe von Parametern gemäß der Auswahl des Schritts (a) oder durch Versand von Informationen eines Warenwirtschaftssystems zu einer benötigten Menge an Gargütern basierend auf der manuellen Eingabe von Parametern gemäß der Auswahl des Schritts (a), wobei vorzugsweise Änderungen der Rezepturen und/oder der gewünschten Menge an Gargütern aus Gründen der Verfügbarkeit oder auf Wunsch des Benutzers jederzeit erfolgen können und in den folgenden Schritte automatisch für die benötigten Berechnungen berücksichtigt werden,
(c) Verarbeitung der Eingabe bzw. der Information aus Schritt (b) von einem Gargerät unter Berücksichtigung von in dem Gargerät hinterlegten Garprozessen und einer hinterlegten Kapazität des Gargeräts, wobei das Gargerät die idealen Garprozesse und benötigten Gerätekapazitäten berechnet,
(d) automatische Erstellung zumindest eines Arbeitsablaufplan mittels von im Gargerät festgelegten, benötigten Ressourcen, insbesondere bestimmt durch Energie, Wasser, Zeit und Platz, um zu einem energetisch optimalen Ablauf und/oder einer maximalen Geräteauslastung zu führen, und
(e) visualisierte Anzeige des mindestens einen erzeugten Arbeitsablaufplans für den Benutzer auf einer der Anzeige- und Eingabeeinrichtung (6, 7, 8, 9), so dass erkenntlich wird, zu welchem Zeitpunkt die jeweilig benötigten Gargüter in welches oder welche Gargeräte beladen bzw. aus demselben/denselben entladen werden müssen.

2. Verfahren nach Anspruch 1, **dadurch gekennzeichnet, dass**
der in Schritt (d) erstellte Arbeitsablauf für einen Tag oder für mehrere Tage, entsprechend den Anforderungen aus den zugrunde liegenden Information in Schritt (c), erstellt wird, wobei vorzugsweise zum Erreichen einer verbesserter Kapazitätsauslastung bei Erstellung eines Ablaufplans für zumindest zwei Tage gleiche Gargüter zusammengefasst werden.

3. Verfahren nach Anspruch 1 oder 2, **dadurch gekennzeichnet, dass**
der Arbeitsablaufplan, ggf. umfassend eine tagesübergreifende Vorproduktion, unter energetischen Gesichtspunkten optimiert wird, und/oder eine eingesetzte Arbeitszeit oder eine Dauer einer Gerätebelegung minimiert wird.

4. Verfahren nach einem der vorangehenden Ansprüchen, **dadurch gekennzeichnet, dass** das Gargerät im Schritt (c) unter Einbeziehung der Eingaben der Schritte (a) und (b) die idealen Garprozesse und benötigten Gerätekapazitäten ermittelt.

5. Verfahren nach einem der vorangehenden Ansprüchen, **dadurch gekennzeichnet, dass** die im Schritt (c) ermittelte benötigte Menge an Gargütern an das Warenwirtschaftssystem zur Aktualisierung und an ein Controllingsystem zur Selbstanlernung weitergeleitet wird, wobei vorzugsweise Informationen aus dem Arbeitsablaufplan an das Controllingsystem, weitergeleitet werden, so dass dieses automatisch unter Berücksichtigung der benötigten Mengen die Kosten eines Wareneinsatzes und/oder Personalkosten und/oder Kosten für jede erzeugte Speise und/oder jedes Menü, wahlweise kumuliert und/oder pro Konsument, berechnet werden können.

6. Verfahren nach einem der vorangehenden Ansprüchen, **dadurch gekennzeichnet, dass** nach der Erstellung eines Ablaufplanes in Schritt (d) für einen Tag oder mehrere Tage Zubereitungsvorschläge, Zubehörvorschläge und/oder Gerätebelegungsvorschläge von dem Gargerät bestimmt und auf einer der Anzeige- und Eingabeeinrichtung (6, 7, 8, 9) dem Benutzer dargestellt werden,
wobei vorzugsweise dem Benutzer wahlweise eine Übersicht über einen Arbeitsablauf oder ein Ausschnitt aus demselben angezeigt wird, und/oder Wechsel zwischen den verschiedenen Anzeigen anhand von Bedienelementen erfolgen kann.

## Claims

1. A method for creating at least one work process in a system (1) of cooking devices (2, 3, 4) which each have a display and input apparatus (6, 7, 8) and are connected via a network (5), wherein an external display and input apparatus (9) is connected to the network (5), having the following steps:
(a) inputting of a recipe via one of the display and input apparatuses (6, 7, 8, 9),
(b) inputting of a required quantity of foods to be cooked based on the manual input of parameters according to the selection of step (a) or by sending information from an inventory control system regarding a required quantity of foods to be cooked based on the manual input of parameters according to the selection of step (a), wherein alterations to the recipes and/or the desired quantity of foods to be cooked can preferably be effected at any time for reasons of availability or at the user's wish and can automatically be taken account of in the following steps for the required calculations,
(c) processing of the input or the information from step (b) by a cooking device, taking account of cooking processes stored in the cooking device and a stored capacity of the cooking device, wherein the cooking device calculates the ideal cooking processes and required device capacities,
(d) automatic creation of at least one work process schedule by means of required resources specified in the cooking device, in particular determined by energy, water, time and space in order to lead to an optimal process in energy terms and/or maximum device utilization, and
(e) visualized display of the at least one produced work process schedule for the user on one of the display and input apparatuses (6, 7, 8, 9) so that it can be identified at which time the respectively required foods to be cooked have to be loaded into which cooking device(s) or have to be unloaded from the same.

2. The method according to Claim 1, **characterized in that**
the work process created in step (d) is created for one day or for multiple days, in accordance with the requirements of the underlying information in step (c),
wherein identical foods to be cooked are preferably combined in order to achieve an improved capacity utilization when creating a process schedule for at least two days.

3. The method according to Claim 1 or 2, **characterized in that** the work process schedule, if applicable comprising preliminary production extending over several days, is optimized in terms of energy, and/or the deployed working time or duration of a device occupancy is minimized.

4. The method according to any one of the preceding claims, **characterized in that** the cooking device establishes the ideal cooking processes and required device capacities in step (c), incorporating the inputs of steps (a) and (b).

5. The method according to any one of the preceding claims, **characterized in that** the required quantity of foods to be cooked established in step (c) is forwarded to the inventory control system for updating and to a controlling system for self-training, wherein information from the work process schedule is preferably forwarded to the controlling system so that the latter, taking account of the required quantities, the costs of goods sold and/or staff costs and/or costs for each produced meal and/or each menu, optionally cumulated and/or per consumer, can be automatically calculated.

6. The method according to any one of the preceding claims, **characterized in that**, following the creation of a process schedule in step (d) for one day or multiple days, preparation suggestions, accessory suggestions and/or device reservation suggestions are determined by the cooking device and are represented to the user on one of the display and input apparatuses (6, 7, 8, 9),
wherein an overview of a work process or an extract of the same is preferably optionally displayed to the user, and/or a change between the various displays can be effected with the aid of operating elements.

## Revendications

1. Procédé d'établissement d'au moins un flux de travail dans un système (1) d'appareils de cuisson (2, 3, 4), qui comprennent chacun un dispositif d'affichage et de saisie (6, 7, 8) et sont reliés par l'intermédiaire d'un réseau (5), un appareil d'affichage et de saisie externe (9) étant relié avec le réseau (5), comprenant les étapes suivantes :
(a) la saisie d'une recette par l'intermédiaire d'un des appareils d'affichage et de saisie (6, 7, 8, 9),
(b) la saisie d'une quantité requise d'aliments à cuire sur la base de la saisie manuelle de paramètres selon la sélection de l'étape (a) ou par envoi d'informations d'un système de gestion des marchandises sur une quantité requise d'aliments à cuire sur la base de la saisie manuelle de paramètres selon la sélection de l'étape (a), des modifications des recettes et/ou de la quantité souhaitée d'aliments à cuire pouvant de préférence avoir lieu à tout moment pour des raisons de disponibilité ou à la demande de l'utilisateur et étant automatiquement prises en compte dans les étapes suivantes pour les calculs requis,
(c) le traitement de la saisie ou des informations de l'étape (b) par un appareil de cuisson, en prenant en compte des processus de cuisson enregistrés dans l'appareil de cuisson et une capacité enregistrée de l'appareil de cuisson, l'appareil de cuisson calculant les processus de cuisson idéaux et les capacités d'appareil requises,
(d) l'établissement automatique d'au moins un plan de flux de travail au moyen de ressources requises définies dans l'appareil de cuisson, notamment déterminées par l'énergie, l'eau, le temps et l'espace, afin de conduire à un flux énergétiquement optimal et/ou à une utilisation maximale des appareils, et
(e) l'affichage visualisé de l'au moins un plan de flux de travail généré pour l'utilisateur sur un des dispositifs d'affichage et de saisie (6, 7, 8, 9), de telle sorte qu'il puisse être vu à quel moment les aliments à cuire requis respectifs doivent être chargés dans quel ou quels appareils de cuisson ou en être déchargés.

2. Procédé selon la revendication 1, **caractérisé en ce que**
le flux de travail établi dans l'étape (d) est établi pour une journée ou pour plusieurs journées, selon les exigences découlant des informations sous-jacentes à l'étape (c),
les mêmes aliments à cuire étant de préférence regroupés lors de l'établissement d'un plan de flux pour au moins deux jours afin d'obtenir une meilleure utilisation de la capacité.

3. Procédé selon la revendication 1 ou 2, **caractérisé en ce que** le plan de flux de travail, comprenant éventuellement une préproduction sur plusieurs jours, est optimisé d'un point de vue énergétique, et/ou un temps de travail utilisé ou une durée d'occupation des appareils est minimisé.

4. Procédé selon l'une quelconque des revendications précédentes, **caractérisé en ce que** l'appareil de cuisson détermine les processus de cuisson idéaux et les capacités d'appareils requises à l'étape (c) en prenant en compte les saisies des étapes (a) et (b).

5. Procédé selon l'une quelconque des revendications précédentes, **caractérisé en ce que** la quantité requise d'aliments à cuire déterminée à l'étape (c) est transmise au système de gestion des marchandises pour la mise à jour et à un système de contrôle pour l'auto-apprentissage, des informations découlant du plan de flux de travail étant de préférence transmises au système de contrôle, de telle sorte que celui-ci puisse calculer automatiquement, en prenant en compte les quantités requises, les coûts d'une utilisation des marchandises et/ou les coûts de personnel et/ou les coûts pour chaque plat produit et/ou chaque menu, éventuellement cumulés et/ou par consommateur.

6. Procédé selon l'une quelconque des revendications précédentes, **caractérisé en ce qu'**après l'établissement d'un plan de flux à l'étape (d) pour une journée ou plusieurs journées, des suggestions de préparations, des suggestions de garnitures et/ou des suggestions d'occupation des appareils sont déterminées par l'appareil de cuisson et présentées à l'utilisateur sur un des dispositifs d'affichage et de saisie (6, 7, 8, 9),
un aperçu d'un flux de travail ou un extrait de celui-ci étant de préférence éventuellement affiché à l'utilisateur, et/ou une commutation entre les différents affichages pouvant avoir lieu à l'aide d'éléments de commande.
